# EUROPÄISCHE PATENTSCHRIFT

(11) **EP 3 311 456 B1**
(45) Veröffentlichungstag und Bekanntmachung des Hinweises auf die Patenterteilung: **06.02.2019**
(21) Anmeldenummer: 16730253.8
(22) Anmeldetag: 15.06.2016
(51) Int. Cl.: H02B 3/00, G05B 19/418, G06F 17/50, H05K 7/14

(54) **VERFAHREN ZUM MONTIEREN VON ELEKTRISCHEN SCHALTANLAGEN SOWIE MONTAGEHILFSVORRICHTUNG ZUM ERLEICHTERN DER MONTAGE SOLCHER SCHALTANLAGEN**
METHOD FOR MOUNTING ELECTRIC SWITCHING SYSTEMS, AND ASSEMBLY SUPPORT DEVICE FOR SIMPLIFYING THE ASSEMBLY OF SUCH SWITCHING SYSTEMS
PROCÉDÉ DE MONTAGE D'INSTALLATIONS DE DISTRIBUTION ÉLECTRIQUES ET DISPOSITIF DE MONTAGE AUXILIAIRE POUR FACILITER LE MONTAGE DE TELLES INSTALLATIONS DE DISTRIBUTION

(30) Priorität: 16.06.2015 DE 102015007624
(43) Veröffentlichungstag der Anmeldung: 25.04.2018
(60) Teilanmeldung: 18212687.0
(73) Patentinhaber: Liebherr-Components Biberach GmbH, 88400 Biberach an der Riß (DE)
(72) Erfinder: FENKER, Oliver, 88447 Warthausen (DE)
(74) Vertreter: Thoma, Michael
(86) Internationale Anmeldenummer: PCT/EP2016/000998
(87) Internationale Veröffentlichungsnummer: WO 2016/202454

(56) Entgegenhaltungen:
- WO-A1-2015/028978
- DE-A1- 19 810 115
- DE-A1-102008 012 122
- DE-U1-202012 003 317

## Beschreibung

Die vorliegende Erfindung betrifft ein Verfahren zum Montieren von elektrischen Schaltanlagen, bei dem elektrische Bauteile an vorbestimmten Anschlusspunkten verdrahtet und/oder miteinander verbunden werden. Die Erfindung betrifft ferner eine Montagehilfsvorrichtung zum Erleichtern und/oder Prüfen der Montage solcher elektrischer Schaltanlagen.

Derartige Schaltanlagen können beispielsweise die Schaltschränke von Bau- oder Materialumschlagmaschinen wie Kranen oder Erdbewegungsmaschinen oder andere Arbeitsmaschinen sein und verschiedene leistungselektronische Bauteile wie Frequenzumrichter, Steuerungselektronik, Kondensatoren sowie verschiedene Kabel mit unterschiedlichen Durchmessern, unterschiedlichen Leitertypen und unterschiedlichen Anschlüssen und dergleichen enthalten. Die Montage solcher elektronischer Schaltanlagen ist regelmäßig hochkomplex, erfordert eine hohe Konzentration des Werkers und ist auch unter Zuhilfenahme von Schaltplänen fehleranfällig. Zum einen müssen nicht nur die Bauteile im Schaltschrank richtig angeordnet werden, sondern es müssen auch die richtigen Anschlusspunkte der richtigen Bauteile mit den jeweils richtigen Kabeln oder Drähten verbunden werden, wobei hier im Schaltschrank nach und nach eine große Anzahl von Kabeln angeordnet wird. Dabei können Bauteile eine Vielzahl von Anschlusspunkten umfassen, an denen ein entsprechendes Bauteil mit diversen anderen Bauteilen zu verdrahten ist, wobei jeweils der richtige Anschlusspunkt mit dem richtigen Bauteil zu verbinden ist. Je nach Bauteil und Verbindung sind hierbei auch Kabel der richtigen Dicke und des richtigen Kabeltyps zu verwenden. Durch die Vielfältigkeit bzw. Verschiedenheit der zu verbauenden und miteinander zu verbindenden Bauteile ist eine standardisierte Ausführung der Arbeitsschritte, die einem Schema folgt, schwierig und auch nicht einfach zu überwachen.

Üblicherweise werden solche Schaltanlagen bisher mit Hilfe eines Schaltplans oder auch unter Zuhilfenahme von Leitungen, auf denen der Start- und Zielanschluss aufgedruckt ist, verdrahtet. In beiden Fällen muss der Werker beide Anschlüsse suchen und die Leitungen entsprechend verlegen. Wird mit einem Schaltplan gearbeitet, muss auch noch markiert werden, welche der Leitungen bereits verlegt worden ist.

Alle diese Arbeiten werden bisher üblicherweise händisch durchgeführt und führen immer wieder zu Fehlern, welche in einem zusätzlichen Prüfschritt aufwändig korrigiert werden müssen. Aufgrund der händischen Verdrahtung, die eine gewisse Fehlerrate aufweist, und der Prüfung, die nicht alle Fehler verlässlich findet, kommt es immer wieder vor, dass Fehler erst beim bestimmungsgemäßen Einsatz durch den Abnehmer des Geräts auffallen.

Anders als bei beispielsweise Netzwerken, bei denen aktuelle Daten des Netzwerks wie beispielsweise MAC-Adressen, aktuelle Verbindungen etc., angezeigt werden können, kann ein Schaltschrank regelmäßig nicht im halbfertigen Zustand hinsichtlich seiner Funktion geprüft werden, da der Schaltschrank noch nicht unter Spannung steht und eine Schritt-für-Schritt-Prüfung nicht möglich ist, da für bestimmte Funktionen das Zusammenspiel aller Bauteile bzw. bestimmter Bauteile notwendig ist, die ggfs. jedoch noch gar nicht montiert sind. Eine automatisierte Überwachung der Montage eines Schaltschranks wird dabei zusätzlich auch noch dadurch erschwert, dass die verschiedenen Bauteile regelmäßig nicht immer in einer vorher festgelegten Reihenfolge montiert werden, sondern dem Werker beim Schaltschrankbau fertig konfigurierte Leitungen in jeweiliger Länge und mit jeweiligen Anschlagmitteln in chaotischer Reihenfolge bereitgestellt werden und der Werker dann diese jeweilige Leitung einbaut. Anders als bei Netzwerkinstallationen mit Patchkabeln, die immer gleich sind und immer gleiche Stecker aufweisen, weichen beim Schaltschrankbau zudem die zu verbauenden Kabel hinsichtlich Kabeldurchmesser, Kabeltyp bzw. Anschlagmittel voneinander ab.

Letztlich ist die Fertigung solcher Schaltschränke sehr abhängig vom jeweiligen Werker und dessen Tagesform. Es wäre deshalb hilfreich, die Montage für den Werker zu vereinfachen und dem Werker ein Hilfsmittel an die Hand zu geben, das die Fehleranzahl reduziert und ein aufwändiges Nacharbeiten vermeidet.

Aus der Schrift DE 198 10 115 C2 ist ein Computersystem bekannt, das mittels einer digitalen Kamera Bilder eines Schaltschranks aufnimmt, in dem die Anschlussklemmen elektrischer Geräte erkennbar sind. Nach Markierung der Anschlussklemmen mittels eines Mausklicks und der Vorgabe von Streckenpunkten des gewünschten Kabelverlaufs zwischen den Anschlussklemmen ebenfalls mittels eines oder mehrerer Mausklicks berechnet das Computersystem die benötigte Kabellänge und steuert eine Kabelkonfektionierungsmaschine an, die dann ein Verdrahtungskabel der benötigten Länge abschneidet und mit Adernendhülsen versieht. Dies erleichtert zwar die Verdrahtung hinsichtlich der Fertigung der benötigten Kabel und vermeidet Materialausschuss durch Ablängen zu kurzer Verdrahtungskabel, kann jedoch die zuvor genannten Fehlerquellen wie Falschanschluss an falschen Anschlusspunkten, Nichtverdrahtung durch Vergessen einer Kabelverbindung und dergleichen nicht eliminieren.

Aus der DE 10 2008 012 122 B4 ist eine Prüfeinrichtung für Schaltschränke oder Racks bekannt, die mittels einer Kamera Bilder des montierten Schaltschranks aufnimmt und Einbaukomponenten anhand von Codemarken identifiziert. Aus einer Überwachungseinrichtung werden ferner Betriebsdaten wie Störungen, die Energiebilanz oder auch Servicehinweise abgerufen und auf einer Anzeigeeinheit für den Prüfingenieur angezeigt. Dieses System erleichtert zwar die Überprüfung und Wartung von Schaltschränken, hilft jedoch nicht bei deren Montage.

Aus der DE 10 2011 107 839 A1 ist ferner eine Prüfvorrichtung bekannt, die mittels einer Kamera und einer Bildauswerteeinrichtung die in einem Serverrack vorhandenen IT-Komponenten und deren Lage im Serverrack identifiziert.

Der vorliegenden Erfindung liegt hiervon ausgehend die Aufgabe zugrunde, ein verbessertes Montageverfahren sowie eine verbesserte Montagehilfsvorrichtung der eingangs genannten Art zu schaffen, die Nachteile des Standes der Technik vermeiden und Letzteren in vorteilhafter Weise weiterbilden. Insbesondere soll die Verdrahtung der elektrischen Bauteile einer Schaltanlage erleichtert, Fehlerquellen minimiert und ein aufwändiges Nacharbeiten vermieden werden.

Erfindungsgemäß wird die genannte Aufgabe durch ein Montageverfahren gemäß Anspruch 1 sowie eine Montagehilfsvorrichtung gemäß Anspruch 15 gelöst. Bevorzugte Ausgestaltungen der Erfindung sind Gegenstand der abhängigen Ansprüche.

Es wird also vorgeschlagen, das Montieren solcher elektrischer Schaltanlagen durch den Einsatz eines Überwachungssystems zu vereinfachen, das die verschiedenen zum Anschließen in der Schaltanlage jeweils bereitgestellten, Bauteile automatisch identifiziert, deren Soll-Anschlüsse bestimmt und das tatsächliche Verbauen auf die richtige Anschlusssituation automatisch prüft. Erfindungsgemäß wird ein zum Anschließen in der Schaltanlage jeweils bereitgehaltenes Bauteil von einer Identifiziereinrichtung identifiziert, wobei mittels einer Anschlusspunkt-Bestimmungseinrichtung in Abhängigkeit des von der Identifiziereinrichtung identifizierten Bauteils zumindest ein Soll-Anschlusspunkt, an dem das identifizierte Bauteil anzuschließen ist, bestimmt wird, und wobei mitteils einer Überwachungsvorrichtung der tatsächliche Anschlusspunkt, an dem das Bauteil tatsächlich angeschlossen wurde, überwacht und bei Abweichen des erfassten tatsächlichen Anschlusspunkts vom Soll-Anschlusspunkt eine Fehlermeldung abgegeben wird. Durch eine solche individiuelle Bauteilidentifizierung und Bestimmung der für das jeweilige, identifzierte Bauteil vorgesehenen Soll-Anschlüsse können die verschiedenartigen Bauteile in nicht vorbestimmter bzw. chaotischer oder abwechselnder Reihenfolge in dem Schaltschrank verbaut werden, ohne dass hierdurch der korrekte Aufbau der Schaltanlage und die korrekte Verbindung der Bauteile untereinander durcheinanderkäme. Gleichzeitig wird eine automatisierte Überwachung der tatsächlichen Anschlusssituationen der Bauteile ermöglicht, da aufgrund der Bauteilidentifizierung die Überwachungseinrichtung weiß, wo das jeweilige Bauteil anzuschließen ist, und insofern für die Überwachung die notwendigen Randbedingungen der zu verarbeitenden Daten reduzieren kann.

Durch die individuelle Bauteilidentifzierung können auch verschiedenartige Bauteile richtig verbaut bzw. hinsichtlich des richtigen Einbaus überwacht werden, und zwar insbesondere auch Bauteile unterschiedlichen Typs oder unterschiedlicher Gattung oder unterschiedlicher Konfektionierung wie beispielsweise Kabel mit verschiedenen Kabeldurchmessern und/oder verschiedenen Leiter- oder Litzentypen und/oder verschiedenen Anschlüssen. Auch elektronische und leistungselektronische Bauteile wie Frequenzumrichter, Steuerungselektronik oder Kondensatoren können von der Identifziereinrichtung individuell identifiziert werden, sodass von der Anschluss-Bestimmungseinrichtung auf Basis eines Signals der Identifziereinrichtung dann die Soll-Anschlussposition bestimmt und von der Überwachungseinrichtung das korrekte Anschließen überwacht werden kann.

Insbesondere kann dabei ein Augmented Reality-System eingesetzt werden, mittels dessen auf einem Display ein Bild der Schaltanlage angezeigt und der von der Bestimmungseinrichtung für das jeweils bereitgehaltene Bauteil bestimmte Anschlusspunkt, an dem das identifizierte Bauteil anzuschließen ist, in das angezeigte Bild auf dem Display eingeblendet wird. Durch die automatische Identifizierung eines jeweils anzuschließenden Bauteils und der vom Augmented Reality-System bereitgestellten Anzeige des Anschlusspunkts des jeweils identifizierten Bauteils in dem auf dem Display gezeigten Bild der Schaltanlage wird dem Werker genau angezeigt, wo der jeweils nächste Arbeitsschritt durchzuführen ist. Hierdurch wird die Montage der Schaltanlage beträchtlich vereinfacht.

Ein solches Augmented Reality-System ist ein computergestütztes Bilddarstellungssystem, mittels dessen ein Bild der Schaltanlage mit computergenerierten Zusatzinformationen überlagert wird.

In vorteilhafter Weiterbildung der Erfindung kann das auf dem Display angezeigte Bild der Schaltanlage ein Livebild oder auch ein aufgezeichnetes Bild sein, das von einer auf die zu montierende Schaltanlage gerichteten Kamera bereitgestellt wird. Der Vorteil der Verwendung eines Livebilds, das jeweils den aktuellen Montagezustand wiedergibt, ist ein erleichterter Abgleich zwischen tatsächlicher Realität und der im Bild angezeigten Realität, so dass sich der Werker letztlich leichter zurechtfindet. Gegebenenfalls kann das Bild aber auch zwischengespeichert oder aufgezeichnet und dem Werker zeitversetzt angezeigt werden. Alternativ oder zusätzlich zu einem von einer vorzugsweise digitalen Kamera bereitgestellten Ist-Bild der Schaltanlage kann ggf. auch ein computergeneriertes, virtuelles Bild der Schaltanlage angezeigt werden, wobei ein solches virtuelles Bild der Schaltanlage beispielsweise von einem dreidimensionalen CAD-System bereitgestellt werden kann, das die Komponenten und deren Anordnung zeigt.

Das auf dem Display angezeigte Bild kann dabei ein ständig aktuell den Ist-Zustand der Schaltanlage wiedergebendes Livebild nach Art eines Fernsehbilds sein. Alternativ kann auch ein nur in größeren Zeitabständen von beispielsweise einigen Sekunden aktualisiertes Standbild angezeigt werden, das den Ist-Zustand der Schaltanlage sozusagen einfriert und die Detailbeobachtung durch weniger Veränderungen erleichtert. Beispielsweise kann auch ein nur im Rhythmus der Arbeitsschritte aktualisiertes Standbild angezeigt werden, das zyklisch oder nach jedem erfolgten Montageschritt aktualisiert und auf dem Display angezeigt wird.

Das dem Werker angezeigte Bild der Schaltanlage wird also vorteilhafterweise ständig oder zyklisch dem fortschreitenden Montagezustand der Schaltanlage angepasst. Während zu Beginn der Montage der Schaltanlage ein relativ "nacktes" Bild der Schaltanlage mit nur wenigen Grundkomponenten wie Trägerrahmen und/oder noch ohne zu montierende Bauteile angezeigt werden kann, wird mit zunehmendem Fortgang der Montage ein immer reicheres Bild der Schaltanlage angezeigt und gegen Ende des Montagevorgangs ein Bild der Schaltanlage mit immer mehr Bauteilen und Verbindungen untereinander angezeigt. Das genannte Anpassen des angezeigten Bilds an den fortschreitenden Montagezustand kann in der genannten Weise durch Anzeigen eines Live-Bilds oder eines gespeicherten, zuvor aufgenommenen Echtbilds realisiert sein. Alternativ oder zusätzlich kann das Bild, beispielsweise ein computergeneriertes Schaltplanbild und/oder ein durch eine Kamera aufgenommenes Bild, in Abhängigkeit der identifizierten und montierten Bauteile nach und nach verändert werden, beispielsweise dergestalt, dass bei richtig montierten Bauteilen diese computergestützt in das anzuzeigende Bild eingebaut werden. Das dem Werker angezeigte Bild verändert sich somit vorteilhafterweise und ist an den tatsächlichen Zustand des Schaltschranks angepasst.

Das genannte Bild der Schaltanlage, in das die zu montierenden elektrischen bzw. elektronischen Komponenten und deren Anschlusspunkte eingeblendet werden, kann grundsätzlich auf verschiedenen Displays angezeigt werden. Beispielsweise kann als Display ein neben dem Schaltschrank stehender Bildschirm oder ein zumindest in der Nachbarschaft zur Schaltanlage positionierter Bildschirm verwendet werden, auf dem das genannte Bild angezeigt wird.

In vorteilhafter Weiterbildung der Erfindung kann das Bild der Schaltanlage auch auf einer Datenbrille angezeigt werden, die der jeweilige Werker beim Montieren tragen kann. Eine solche Datenbrille kann beispielsweise ein im Bereich eines üblichen Brillenglases positionierbares Display umfassen, welches beispielsweise am Brillenrahmen verschwenkbar gelagert sein kann, um vor das Auge oder vom Auge weggeschwenkt werden zu können. Alternativ oder zusätzlich kann das Display auch nach Art eines Head-up-Displays arbeiten, das das Bild auf das Brillenglas projizieren kann, durch das der Werker hindurchsehen kann. Solche Datenbrillen sind per se bekannt und beispielsweise in den Schriften DE 20 2012 003 317 U1 oder DE 20 2012 003 332 U1 beschrieben, auf die insoweit bezüglich der Ausbildung der Datenbrille verwiesen werden darf.

Um die Anschlusspunkte der anzuschließenden Bauteile und deren Soll-Position in dem Bild der Schaltanlage anzeigen zu können, kann das genannte Augmented Reality-System bzw. das computergestützte Bildgenerierungssystem vorteilhafterweise eine CAD-Schnittstelle aufweisen, um die Anschlusspunkte der zu verdrahtenden bzw. anzuschließenden elektrischen Bauteile und deren Sollposition in der elektrischen Schaltanlage aus einem Elektro-CAD-System zu entnehmen, an das das Augmented Reality-System angebunden werden kann. Ein solches E-CAD-System kann beispielsweise den Schaltplan der zu verdrahtenden Schaltanlage speichern oder insbesondere auch das E-CAD-System sein, auf dem die Schaltanlage und/oder deren Schaltplan generiert wurde. Alternativ oder zusätzlich zu einer direkten Anbindung an das genannte E-CAD-System kann dem Augmented Reality-System auch ein CAD-Datensatz zugeführt werden, der die Schaltanlage und/oder deren Schaltplan wiedergibt, wobei ein solcher CAD-Datensatz beispielsweise ein Speichermittel wie eine CD-ROM oder einen USB-Stick oder in anderer Weise zugeführt werden kann, wofür das Augmented Reality-System eine entsprechende Schnittstelle aufweisen kann.

Vorteilhafterweise kann mittels des Augmented Reality-Systems bzw. dessen Einblendvorrichtung in das auf dem Display angezeigte Bild der Schaltanlage nicht nur der Anschlusspunkt eines Bauteils, sondern auch dessen Position und/oder dessen Ausrichtung und/oder dessen Montagestellung in der Schaltanlage angezeigt bzw. eingeblendet werden, so dass ein Werker auch sehen kann, wo genau in der Schaltanlage das jeweilige Bauteil zu positionieren und zu montieren ist. Dabei kann die von der Kamera aufgenommene Ist-Position und/oder Ist-Ausrichtung des Bauteils und/oder die Ist-Position dessen Anschlusspunkts auf dem Display mit der entsprechenden Soll-Position und/oder Soll-Ausrichtung, die aus dem E-CAD-System gewonnen oder der genannten E-CAD-Datei entnommen werden kann, überblendet werden, um Abweichungen der montierten Ist-Position bzw. Ist-Ausrichtung mit der Soll-Position bzw. Soll-Ausrichtung zu verdeutlichen.

Die Identifiziereinrichtung zum Identifizieren eines jeweils anzuschließenden Bauteils kann grundsätzlich verschieden ausgebildet sein. Beispielsweise kann das zu identifizierende Bauteil anhand einer am Bauteil angebrachten Markierung beispielsweise in Form eines Strichcodes und/oder eines Buchstaben- oder Zahlencodes und/oder eines anderen Zeichencodes und/oder einer geometrischen Formmarkierung identifiziert werden. Beispielsweise kann die Identifiziereinrichtung hierzu einen Barcodeleser aufweisen. Alternativ oder zusätzlich kann aber auch eine Identifizierung in anderer Weise erfolgen, beispielsweise mittels eines RFID-Chips.

Insbesondere kann das zu verdrahtende Bauteil auch mittels einer Bildauswerteeinrichtung identifiziert werden, die das Bauteil anhand seiner Kontur und/oder Größe und/oder Farbe und/oder Oberflächenbeschaffenheit wie Licht reflektierend, verspiegelt etc. identifizieren kann. Insbesondere kann die Bildauswerteeinrichtung dabei die Bilddaten auswerten, die von der die Schaltanlage beobachtenden Kamera bereitgestellt werden.

Alternativ oder zusätzlich kann ein jeweiliges Bauteil auch anhand seiner Anschlagmittel wie Aderendhülsen und/oder der Abmessungen seiner Haupterstreckungsachsen und/oder seines Durchmessers und/oder seiner Geometrie von der Identifiziereinrichtung identifiziert werden.

Hierdurch wird es in Weiterbildung der Erfindung ermöglicht, dass der Werker ein jeweils zu montierendes Bauteil einfach in den Schaltschrank bzw. in das Kamerafeld der die Schaltanlage beobachtenden Kamera bzw. in den Scanbereich einer Scaneinrichtung hält, bevor das Bauteil tatsächlich verdrahtet wird. Die Bildauswerteeinheit kann dann in dem von der Kamera bereitgestellten Bild das dort gezeigte Bauteil anhand eines der vorgenannten Kriterien wie beispielsweise einem Strichcode oder dergleichen identifizieren.

In Weiterbildung der Erfindung kann mit Hilfe des Augmented Reality-Systems auch eine Überwachung einzelner oder aller Montageschritte vorgenommen werden. Hierbei kann das von der Kamera des Augmented Reality-Systems aufgenommene Ist-Bild der Verdrahtung und der Anordnung der Komponenten mit der Soll-Verdrahtung und der Soll-Anordnung der Komponenten, wie sie aus dem E-CAD-System gewonnen werden kann, verglichen werden. Hierzu identifiziert die Bildauswerteeinrichtung in dem Kamerabild die einzelnen Bauteile, beispielsweise anhand des vorgenannten Barcodes, und die daran angeschlossenen Leitungen bzw. die Anschlussstellen, an denen das identifizierte Bauteil angeschlossen wurde. Weichen die identifizierten Anschlusspunkte und/oder Verdrahtungsverläufe von dem Soll-Zustand gemäß Schaltplan, wie er aus dem E-CAD-System oder auch durch ein vorausgehendes Teach-In-Verfahren gewonnen werden kann, ab, kann eine Fehlermeldung ausgegeben und auf dem am Display angezeigten Kamerabild die entsprechende Fehlerstelle markiert werden.

Neben der kompletten Verdrahtung können von der Überwachungseinrichtung auch Teilschritte des Montageprozesses überwacht werden. So kann beispielsweise beim Aufbringen einer Aderendhülse überwacht werden, ob eine Leitung mit richtigem Querschnitt und/oder auf die richtige Länge abisoliert wurde und/oder ob die Aderendhülse richtig gecrimpt wurde.

Alternativ oder zusätzlich kann die Überwachungseinrichtung überwachen, ob bei einem Montageschritt das jeweils richtige Werkzeug verwendet wird, beispielsweise der richtige Schraubenschlüssen zum Anziehen von Schrauben. Alternativ oder zusätzlich kann überwacht werden, ob eine Leitung in der richtigen Farbe und/oder mit dem richtigen Querschnitt verlegt wird. Alternativ oder zusätzlich kann auch das richtige Anschlagen von Aderenden überwacht werden.

Zusätzlich kann die Überwachungseinrichtung auch Fehlbestückungen überwachen und erkennen. Wird beispielsweise ein Bauteil nicht an seinem gemäß Schaltplan vorgegebenen Platz gefunden bzw. identifiziert, kann eine Fehlermeldung angezeigt werden, beispielsweise durch Abbildung eines Fehlersymbols an der fehlbestückten Position im Kamerabild.

In Weiterbildung der Erfindung kann mittels des genannten Augmented Reality-Systems auch die Montage bzw. Fertigung dokumentiert werden, beispielsweise bei sicherheitskritischen Bauteilen, um später einen entsprechenden Produktfunktionsnachweis führen zu können.

Alternativ oder zusätzlich können in Weiterbildung der Erfindung auch Hilfen für den Werker bei Bedarf angezeigt werden, beispielsweise auf dem genannten Display. Derartige Hilfen können beispielsweise Texte umfassen, die eingeblendet werden, oder Videos sein, die auf dem Display abgespielt werden können.

Die Erfindung wird nachfolgend anhand eines Ausführungsbeispiels und zugehöriger Zeichnungen näher erläutert. In den Zeichnungen zeigen:
- Fig. 1:: eine schematische Darstellung eines zu montierenden Schaltschranks und der den Werker unterstützenden Montagehilfsvorrichtung umfassend ein Augmented Reality-System,
- Fig. 2:: eine schematische Darstellung einer Datenbrille mit integriertem Display, auf dem das Augmented Reality-System aus Fig. 1 dem Werker ein Kamerabild und darin eingeblendete Montagehilfen anzeigen kann, und
- Fig. 3:: eine schematische ausschnittsweise Darstellung des Kamerabilds eines zu verdrahtenden Bauteils mit einem darin eingeblendeten Montagehilfspfeil, der den aktuell zu montierenden Anschlusspunkt identifiziert.

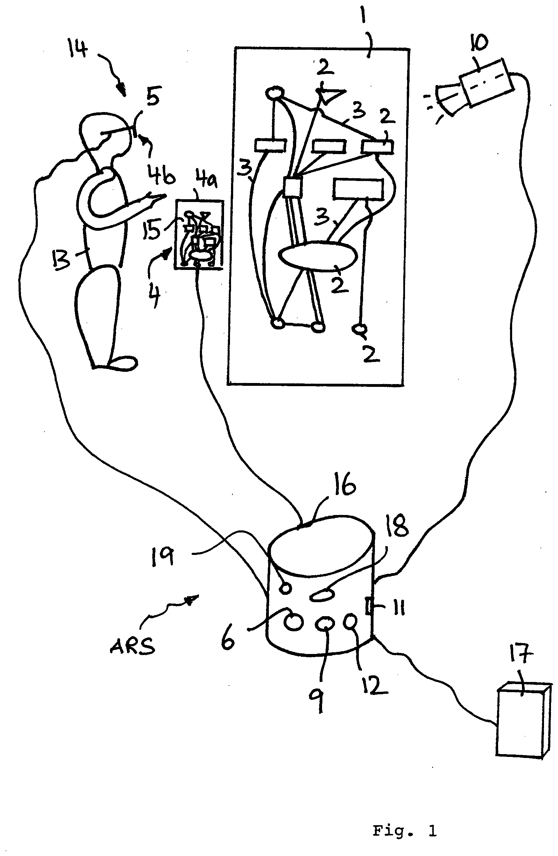

Wie Fig. 1 zeigt, kann die zu montierenden Schaltanlage 1 beispielsweise ein Schaltschrank sein, in dem diverse elektrische bzw. elektronische Bauteile 2 beispielsweise in Form von Leistungselektronikkomponenten wie Frequenzumrichtern und steuerungstechnische Bausteine wie Signalgeber, Schaltungsblöcke und dergleichen zu montieren und miteinander durch Kabel 3 zu verdrahten sind. Die elektrischen Bauteile 2 können hierbei jeweils zumindest einen oder auch mehrere Anschlusspunkte 7 umfassen, an denen die elektrischen Bauteile zu verdrahten sind. Anstelle der dargestellten Kabel 3 kann die Verdrahtung auch durch Anschließen an Leiterplatten, Montageplatinen und dergleichen erfolgen, in denen entsprechende Verdrahtungsleitungen integriert sein können.

Um dem Werker 13 die Montage zu erleichtern, umfasst die Montagehilfsvorrichtung 14 ein Augmented Reality-System ARS, das dem Werker 13 ein Bild 15 der Schaltanlage 1 anzeigt und darin computergestützt Informationen in Form von Symbolen, Markierungen, Schriftzeichen, Videos und dergleichen einblendet, die Montageanweisungen enthalten können, Anschlusspunkte identifizieren können, Soll-Positionen und Soll-Ausrichtungen der elektrischen Bauteile anzeigen können oder andere für die Montage hilfreiche Informationen umfassen können.

Wie Fig. 1 zeigt, kann das Augmented Reality-System ARS zumindest eine Kamera 10 umfassen, die die Schaltanlage 1 beobachtet und ein Ist-Bild der Schaltanlage 1 bereitstellt. Von einem Server oder einem Rechner 16 des Augmented Reality-Systems ARS wird das Kamerabild auf zumindest einem Display 4 angezeigt. Dieses Display 4 kann einen neben der Schaltanlage 1 installierten Bildschirm 4a umfassen.

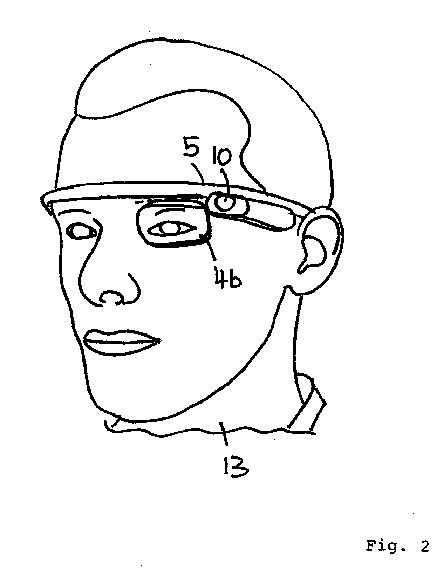

Alternativ oder zusätzlich kann das Display 4 auch ein in eine Datenbrille 5 integriertes Brillendisplay 4b aufweisen, vgl. Fig. 2, das beispielsweise nach Art eines Projektors bzw. eines Head-up-Displays die darzustellenden Bilder und Informationen auf einem Brillenglas bzw. einer brillenglasähnlichen Bildschirmfläche anzeigen kann, die vor ein Auge des Werkers 13 positionierbar ist, beispielsweise auch wegklappbar sein kann, um auch einen freien Blick auf die vorzunehmende Arbeit zu gestatten.

Wie Fig. 2 zeigt, kann in die genannte Datenbrille 5 auch die genannte oder eine weitere Kamera 10 integriert sein, die ebenfalls Teil des Augmented Reality-Systems ARS sein kann bzw. an den genannten Rechner 16 angebunden werden kann, um mit einzublendenden Zusatzinformationen überlagert zu werden, die dann wiederum auf einem der Displays 4a oder 4b dargestellt werden.

Wie Fig. 1 zeigt, kann der Rechner 16 des Augmented Reality-Systems ARS an ein E-CAD-System 17 angebunden werden, aus dem Informationen über die zu verdrahtenden Bauteile 2, deren Anschlusspunkte, deren Soll-Position und deren Soll-Ausrichtung in der Schaltanlage 1 und/oder insbesondere auch deren Schaltplan bzw. Verdrahtungsplan gewonnen werden können.

Hierzu kann das Augmented Reality-System ARS bzw. das Montage-Hilfs-System zunächst ein in der Schaltanlage 1 zu verbauendes Bauteil 2 mittels einer Identifiziereinrichtung 6 identifizieren. Dabei kann eine Bildauswerteeinrichtung 9 und/oder eine Scaneinrichtung bzw. eine andere Leseeinrichtung vorgesehen sein, die eine Markierung 8 an dem Bauteil 2, beispielsweise in Form eines Barcodes, auswerten kann. Wird in den von der Kamera 10 bereitgestellten Bilddaten ein solcher Barcode bzw. eine solche Markierung 8 erkannt, kann das Bauteil 2 identifiziert werden, beispielsweise durch Rückgriff auf das E-CAD-System 17, in dem zu dem erkannten Barcode entsprechende Informationen zugeordnet abgelegt sein können. Alternativ oder zusätzlich zu einer solchen Erkennung anhand eines Barcodes oder einer Markierung, kann die Identifiziereinrichtung 6 ein Bauteil 2 auch anhand dessen Form und/oder Konturierung und/oder Farbe oder anderen Charakteristika identifizieren.

Beispielsweise kann mittels der genannten Bildauswerteeinrichtung 9 ein anzuschließendes Kabel anhand des Kabeldurchmessers und/oder der Kabelmantelfarbe und/oder der Kabelmantelmusterung und/oder der Kabellänge und/oder der Kabelendstücke und/oder der Kabelanschlussstücke und/oder einer Kabelmarkierung von der Identifiziereinrichtung erkannt werden. Gegebenenfalls kann auch auf spezielle Markierungen wie Barcodes oder Ziffernfolgen verzichtet und das Kabel anhand der anderen genannten Kriterien erkannt werden, sodass bei der Konfektionierung keine speziellen, individuellen Kabelmarkierungen anzubringen sind. Andere Bauteile des Schaltschranks wie beispielsweise dessen leistungselektronischen Komponenten wie Frequenzumrichter, oder Signalgeber und Schaltungsblöcke können von der Bildauswerteeinrichtung 9 beispielsweise anhand der Abmessungen der Haupterstreckungsachsen und/oder der Umrisskontur und/oder der Farbe und/oder der Oberflächenstruktur und/oder der Oberflächenmusterung identifiziert werden.

Ist das jeweils zum Anschließen bereitgehaltene Bauteil identifiziert, können dessen Anschlusspunkte und/oder Positionierung im Schaltschrank ermittelt werden. Eine Anschlusspositions-Bestimmungseinrichtung 19 kann in Abhängigkeit eines Signals der Identifziereinrichtung 6, welches das Bauteil 2 identifziert, die genannten Anschlusspunkte bestimmen, beispielsweise durch Rückgriff auf das genannte E-CAD-System 17, in dem die Verdrahtung des Schaltschranks bzw. die Anschlusspunkte der Bauteile 2 abgelegt sein können.

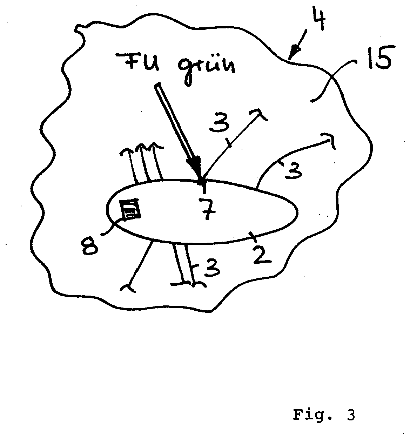

Wie Fig. 3 zeigt, kann dann in das auf dem Display 4 angezeigte Bild eines Bauteils 2 eine Zusatzanweisung eingeblendet werden, die beispielsweise einen Anschlusspunkt 7 angibt, im dargestellten Beispiel den Anschlusspunkt 7 für einen grünen Draht 3, der zu einem Frequenzumrichter gehen soll, was durch das Pfeilsymbol und das zugeordnet eingeblendete Kurzsymbol "FU grün" verdeutlicht wird.

Auf diese Weise kann nacheinander jeder Montageschritt auf dem Display 4 dargestellt werden, wobei nach einem erfolgten Montageschritt auch überprüft werden kann, ob ein richtiges Kabel - beispielsweise mit richtigem Durchmesser und/oder richtiger Farbe und/oder richtigem Kabeltyp - am richtigen Anschlusspunkt angeschlossen worden ist.

Hierzu kann eine Überwachungsvorrichtung 18 ein nach dem Montageschritt aufgenommenes Kamerabild und die hieraus gewonnenen Ist-Informationen über den Ist-Zustand mit den aus dem E-CAD-System 17 gewonnenen Soll-Informationen abgleichen, wobei bei Abweichungen, die einen bestimmten Schwellwert beispielsweise hinsichtlich Position überschreiten oder von anderen digitalen Referenzdaten in Form von Soll-Charakteristika abweichen, eine Fehlermeldung ausgeben kann, die dann wiederum am Display 4 dem Werker 13 angezeigt werden kann. Insbesondere kann die genannte Überwachungsvorrichtung 18 die tatsächlichen Anschlusspunkte eines Bauteils 2 mit dessen Soll-Anschlusspunkten, die von der Bestimmungseinrichtung 19 auf Basis eines Signals der Identifziereinrichtung 6 bestimmt wurden, abgleichen und ggfs. eine Fehlermeldung ausgeben, wenn die tatsächlichen Anschlusspunkte nicht mit den Soll-Anschlusspunkten übereinstimmen.

Die genannte, automatisierte individuelle Bauteilerkennung durch die Identifiziereinrichtung 6 im Zusammenspiel mit der automatisierten Bestimmung der Anschlusspunkte durch die Bestimmungseinrichtung 19 und der Überwachungsvorrichtung 18 erlaubt es, dass der Werker die Datenbrille 5 auch zeitweise ablegt und die Montage ohne Augmented Reality ausführt, ohne dass hierdurch die Verkabelung des Schaltschranks durcheinanderkommen könnte. Das Ablegen der Datenbrille 5 gestattet ein angenehmeres, ermüdungsfreieres Arbeiten, gleichzeitig wird jedoch eine korrekt ausgeführte Montage sichergestellt.

## Patentansprüche

1. Verfahren zum Montieren von elektrischen Schaltanlagen (1), bei dem elektrische Bauteile (2) verdrahtet und/oder miteinander verbunden werden, wobei die Schaltanlage (1) aus einer Vielzahl von verschiedenen Bauteilen (2) in vorher nicht festgelegter und/oder abwechselnder Reihenfolge nach und nach aufgebaut wird, **dadurch gekennzeichnet, dass** mittels einer Identifiziereinrichtung (6) ein zum Anschließen in der Schaltanlage (1) jeweils bereitgehaltenes Bauteil (2) identifiziert wird, dass mittels einer Anschlußpunkt-Bestimmungseinrichtung (19) in Abhängigkeit des von der Identifiziereinrichtung (6) identifizierten Bauteils (2) zumindest ein Soll-Anschlusspunkt (7), an dem das identifizierte Bauteil (2) anzuschließen ist, bestimmt wird, und dass mittels einer Überwachungsvorrichtung (18) der tatsächliche Anschlußpunkt, an dem das Bauteil (2) tatsächlich angeschlossen wurde, überwacht und bei Abweichen des erfaßten tatsächlichen Anschlußpunkts vom Soll-Anschlußpunkt (7) eine Fehlermeldung abgegeben wird.

2. Verfahren nach dem vorhergehenden Anspruch, wobei mittels eines Augmented Reality-Systems (ARS) auf einem Display (4) ein Bild der Schaltanlage (1) von einer auf die Schaltanlage (1) gerichteten Kamera (10) als Livebild oder aufgezeichnetes Bild angezeigt und der von der Bestimmungseinrichtung (19) für das bereitgehaltenen Bauteil (2) jeweils bestimmte Anschlusspunkt (7), an dem das identifizierte Bauteil (2) anzuschließen ist, in das angezeigte Bild auf dem Display (4) eingeblendet wird.

3. Verfahren nach dem vorhergehenden Anspruch, wobei von dem Augmented Reality-System (ARS) auch eine Soll-Montagestellung und/oder eine Soll-Position des identifizierten Bauteils (2) in der Schaltanlage (1) in das angezeigte Bild auf dem Display (4) eingeblendet wird.

4. Verfahren nach einem der beiden vorhergehenden Ansprüche, wobei das auf dem Display angezeigte Bild der Schaltanlage (1) kontinuierlich oder zyklisch an den Montage-Ist-Zustand der Schaltanlage angepasst wird, wobei mit fortschreitender Montage in dem Bild der Schaltanlage (1) nach und nach mehr Bauteile (2) und deren Verbindung untereinander angezeigt werden, wobei vorzugsweise die Anpassung des angezeigten Bilds in Abhängigkeit der von der Identifzierungseinrichtung (6) identifizierten Bauteile und/oder in Abhängigkeit der von der Überwachungsvorrichtung (18) überwachten Anschlussvorgänge gesteuert wird.

5. Verfahren nach einem der vorhergehenden Ansprüche, wobei der zumindest eine für ein identifiziertes Bauteil (2) zu bestimmende Soll-Anschlusspunkt (7) und dessen Soll-Position in der Schaltanlage (1) von der Bestimmungseinrichtung (19) aus einem Elektro-CAD-System und/oder aus einem CAD-Datensatz, der die Schaltanlage (1) und/oder deren Schaltplan wiedergibt, entnommen wird.

6. Verfahren nach einem der vorhergehenden Ansprüche, wobei das jeweils zum Anschliessen bereitgehaltene Bauteil (2) von der Identifiziereinrichtung (6)
- anhand einer am Bauteil (2) angebrachten Markierung (8), insbesondere in Form eines Strich- oder Zeichencodes, identifiziert wird, und/oder
- anhand von Bilddaten, die auch zum Erzeugen des Bilds der Schaltanlage (1) auf dem Display (4) verwendet werden, durch eine Bildauswerteeinrichtung (9) identifiziert wird, insbesondere anhand einer Farbe des Bauteils (2) und/oder eines Durchmessers des Bauteils (2) und/oder einer Abmessung zumindest einer Haupterstreckungsachse und/oder eines Geometriemaßes des Bauteils (2) identifiziert wird.

7. Verfahren nach Anspruch 2 oder einem der darauf rückbezogenen Ansprüche, wobei das Bild der Schaltanlage auf einer vom Werker zu tragenden Datenbrille (11) angezeigt wird, und von einer an der Datenbrille (11) vorgesehenen Kamera (10) aufgenommen wird.

8. Verfahren nach einem der vorhergehenden Ansprüche, wobei von der Überwachungsvorrichtung (18) zumindest ein während und/oder nach einem Montageschritt bereitgestelltes Bild der Schaltanlage (1) mittels einer Bildauswerteeinrichtung (9) ausgewertet wird, wobei ein von der Bildauswerteeinrichtung (9) identifiziertes Bauteil (2) hinsichtlich seiner aus dem Bild gewonnenen Ist-Position und/oder Ist-Ausrichtung und/oder Ist-Verdrahtung mit einer von der Anschluß-Bestimmungseinrichtung (19) für das identifizerte Bauteil (2) bereitgestellten Soll-Position und/oder Soll-Ausrichtung und/oder Soll-Verdrahtung verglichen wird, wobei bei einer Abweichung bei dem genannten Soll-Ist-Vergleich eine Fehlermeldung ausgegeben wird.

9. Verfahren nach dem vorhergehenden Anspruch, wobei von der Überwachungsvorrichtung (18) zumindest einer der folgenden Überwachungsschritte ausgeführt wird:
- Beim Aufbringen einer Aderendhülse, Überwachung, ob eine Leitung mit richtigem Querschnitt und/oder auf die richtige Länge abisoliert und/oder eine Aderendhülse richtig gecrimpt wurde;
- Überwachung der Verwendung eines vorbestimmten Werkzeugs;
- Überwachung der Verlegung einer Leitung in einer vorbestimmten Farbe und/oder mit einem vorbestimmten Querschnitt;
- Überwachung des Anschlagens von Aderenden in vorbestimmter Weise;
- Überwachung von Fehlbestückungen;
- Überwachung der Montage eines Bauteils (2) an einem vorbestimmten Platz der Schaltanlage (1).

10. Verfahren nach einem der vorhergehenden Ansprüche, wobei als Schaltanlage (1) ein Schaltschrank montiert wird, in den verschiedene elektronische und leistungselektronische Bauteile (2) wie Frequenzumrichter, Kondensatoren und Signalgeberbausteine, einerseits und verschiedene Kabel mit unterschiedlichen Kabeldurchmessern andererseits verbaut werden.

11. Montagehilfsvorrichtung zum Erleichtern und Prüfen der korrekten Montage von elektrischen Schaltanlagen (1), die aus einer Vielzahl von verschiedenen Bauteilen (2) in vorher nicht festgelegter Reihenfolge nach und nach aufgebaut werden, mit einer Identifiziereinrichtung (6) zum Identifizieren eines zum Anschließen in der Schaltanlage (1) jeweils bereitgehaltenen Bauteils (2), einer Anschlußpunkt-Bestimmungseinrichtung (19) zum Bestimmen zumindest ein Soll-Anschlusspunkt (7), an dem das identifizierte Bauteil (2) anzuschließen ist, in Abhängigkeit eines Signals der Identifiziereinrichtung (6), und einer Überwachungsvorrichtung (18) zum Überwachen des tatsächliche Anschlußpunkts, an dem das Bauteil (2) tatsächlich angeschlossen wurde, und Bereitstellen einer Fehlermeldung bei Abweichen des erfaßten tatsächlichen Anschlußpunkts vom Soll-Anschlußpunkt (7).

12. Montagehilfsvorrichtung nach dem vorhergehenden Anspruch, mit einem Augmented Reality-System (ARS) umfassend ein Display (4) zum Anzeigen eines Bilds der Schaltanlage (1) und einer Einblendvorrichtung zum Einblenden des zumindest einen Anschlusspunkts (7) des identifizierten Bauteils (2) in das auf dem Display (4) angezeigte Bild der Schaltanlage (1), wobei eine auf die zu montierende Schaltanlage (1) gerichtete Kamera (10) zum Bereitstellen des auf dem Display (4) anzuzeigenden Bilds als Livebild und/oder als aufgezeichnetes Bild vorgesehen ist.

13. Montagehilfsvorrichtung nach einem der beiden vorhergehenden Ansprüche, wobei das Display (4) und/oder die Kamera (10) in eine vom Werker zu tragende Datenbrille (11) integriert sind.

14. Montagehilfsvorrichtung nach einem der vorhergehenden Ansprüche, wobei das Augmented Reality-System (ARS) eine CAD-Datenschnittstelle aufweist und an ein Elektro-CAD-System, in dem die Schaltanlage (1) und/oder deren Schaltplan generierbar und/oder speicherbar ist, anschließbar ist.

15. Montagehilfsvorrichtung nach einem der vorhergehenden Ansprüche, wobei die Identifiziereinrichtung (6) einen Codeleser (12) zum Lesen einer auf einem zu montierenden Bauteil (2) angebrachten Markierung (8), insbesonderen einen Barcodeleser aufweist, und/oder eine Bildauswerteeinrichtung (9) zum Auswerten der auf dem Display (4) angezeigten Bilddaten und identifizieren eines Bauteils (2) aus diesen Bilddaten aufweist.

16. Montagehilfsvorrichtung nach einem der vorhergehenden Ansprüche, wobei die Überwachungsvorrichtung (18) eine Bildauswerteeinrichtung (9) zum Auswerten zumindest eines während und/oder nach einem Montageschritt aufgenommenen Bilds aufweist und eine Vergleichsvorrichtung zum Vergleichen von durch die Bildauswertung gewonnenen Informationen betreffend eine Ist-Position und/oder eine Ist-Ausrichtung und/oder eine Ist-Verdrahtung eines identifizierten Bauteils (2) mit einer Soll-Position und/oder einer Soll-Ausrichtung und/oder einer Soll-Verdrahtung aufweist, wobei ein Fehlermelder zum Einblenden einer Fehlermeldung in das auf dem Display (4) dargestellte Bild in Abhängigkeit eines Signals der Vergleichseinrichtung vorgesehen ist.

## Claims

1. A method of assembling electrical switching systems (1) in which electrical components (2) are wired and/or connected to one another, wherein the switching system (1) is set up gradually from a plurality of different components (2) in a previously non-fixed and/or alternating order, **characterized in that** a component respectively provided for connection in the switching system (1) is identified by means of an identification device (6); **in that** at least one desired connector point (7) to which the identified component (2) is to be connected is determined by means of a connector point determination device (19) in dependence on the component (2) identified by the identification device (6); and **in that** the actual connector point to which the component (2) was actually connected is monitored by means of a monitoring device (18) and an error message is output in the event of a deviation of the detected actual connector point from the desired connector point (7).

2. A method in accordance with the preceding claim, wherein an image of the switching system (1) is displayed on a display (4) by means of an augmented reality system (ARS) by a camera (10) directed to the switching system (1) as a live image or as a recorded image and the connector point (7) to which the identified component (2) is to be connected and which is respectively determined by the determination device (19) for the provided component (2) is superimposed in the displayed image on the display (4).

3. A method in accordance with the preceding claim, wherein a desired assembly position and/or a desired position of the identified component (2) in the switching system (1) is also superimposed in the displayed image on the display (4) by the augmented reality system (ARS).

4. A method in accordance with one of the two preceding claims, wherein the image of the switching system (1) displayed on the display is continuously or cyclically adapted to the actual assembly status of the switching system, wherein, as the assembly progresses, more components (2) and their connections to one another are gradually displayed in the image of the switching system (1), with the adaptation of the displayed image preferably being controlled in dependence on the components identified by the identification device (6) and/or in dependence on the connection procedures monitored by the monitoring apparatus (18).

5. A method in accordance with one of the preceding claims, wherein the at least one desired connector point (7) and its desired position in the switching system (1) to be determined for an identified component (2) is taken by the determination device (19) from an electrical CAD system and/or from a CAD data record that shows the switching system (1) and/or its circuit diagram.

6. A method in accordance with one of the preceding claims, wherein the respective component (2) provided for connection is identified by the identification device (6)
- with reference to a mark (8) applied to the component (2), in particular in the form of a barcode or character code, and/or
- through an evaluation device (9) with reference to image data that are also used to produce the image of the switching system (1) on the display (4), in particular with reference to a color of the component (2) and/or to a diameter of the component (2) and/or to a dimension of at least one main axis of extent and/or to a geometrical measure of the component (2).

7. A method in accordance with claim 2 or with one of the claims dependent thereon, wherein the image of the switching system is displayed on smartglasses (11) to be worn by the workman and is recorded by a camera (10) provided at the smartglasses (11).

8. A method in accordance with one of the preceding claims, wherein at least one image of the switching system (1) provided during and/or after an assembly step is evaluated by the monitoring device (18) by means of an image evaluation device (9), with a component (2) identified by the image evaluation device (9) being compared with respect to its actual position and/or its actual alignment and/or its actual wiring acquired from the image with a desired position and/or desired alignment and/or desired wiring provided by the connector determination device (19) for the identified component (2), with an error message being output on a deviation in said desired/actual comparison.

9. A method in accordance with the preceding claim, wherein at least one of the following monitoring steps is carried out by the monitoring device (18):
- on the attachment of a wire ferrule, monitoring whether a lead having the correct cross-section was insulated and/or insulated to the correct length and/or whether a wire ferrule was correctly crimped;
- monitoring the use of a predefined tool;
- monitoring the laying of a lead in a predefined color and/or having a predefined cross-section;
- monitoring the fitting of conductor ends in a predefined manner;
- monitoring incorrect mountings; and
- monitoring the assembly of a component (2) at a predefined position of the switching system (1).

10. A method in accordance with one of the preceding claims, wherein a switch cabinet is assembled as the switching system (1) in which various electronic and power electronic components (2) such as frequency converters, capacitors, and signal generator modules, on the one hand, and various cables having different cable diameters, on the other hand, are installed.

11. An auxiliary assembly apparatus for facilitating and checking the correct assembly of electric switching systems (1) that are gradually built up from a plurality of different components (2) in a non-fixed order, comprising an identification device (6) for identifying a component (2) respectively provided for connection in the switching system (1); a connector point determination device (19) for determining at least one desired connector point (7) to which the identified component (2) is to be connected in dependence on a signal of the identification device (6); and a monitoring apparatus (18) for monitoring the actual connector point to which the component (2) has actually been connected; and providing an error message on a deviation of the detected actual connector point from the desired connector point (7).

12. An auxiliary assembly apparatus in accordance with the preceding claim, having an augmented reality system (ARS) comprising a display (4) for displaying an image of the switching system (1) and a superimposition device for superimposing the at least one connector point (7) of the identified component (2) in the image of the switching system (1) displayed on the display (4), wherein a camera (10) directed to the switching system (1) to be assembled is provided for providing the image to be displayed on the display (4) as a live image and/or as a recorded image.

13. An auxiliary assembly apparatus in accordance with one of the two preceding claims, wherein the display (4) and/or the camera (10) are integrated in smartglasses (11) to be worn by the workman.

14. An auxiliary assembly apparatus in accordance with one of the preceding claims, wherein the augmented reality system (ARS) has a CAD data interface and is connectable to an electrical CAD system in which the switching system (1) and/or its circuit diagram can be generated and/or stored.

15. An auxiliary assembly apparatus in accordance with one of the preceding claims, wherein the identification device (6) has a code reader (12) for reading a mark (8) applied to a component (2) to be assembled, in particular a barcode reader and/or an image evaluation device (9) for evaluating the image data displayed on the display (4) and identifying a component (2) from these image data.

16. An auxiliary assembly apparatus in accordance with one of the preceding claims, wherein the monitoring apparatus (18) has an image evaluation device (9) for evaluating at least one image recorded during and/or after an assembly step and has a comparison apparatus for comparing information acquired by the image evaluation relating to an actual position and/or to an actual alignment and/or to an actual wiring of an identified component (2) with a desired position and/or a desired alignment and/or a desired wiring, wherein an error alarm is provided for superimposing an error message in the image shown on the display (4) in dependence on a signal of the comparison device.

## Revendications

1. Procédé de montage d'installations de distribution électriques (1), dans lequel des composants électriques (2) sont câblés et/ou reliés les uns aux autres, l'installation de distribution (1) étant constituée progressivement d'une pluralité de composants (2) différents dans un ordre non préalablement défini et/ou variable, **caractérisé en ce que**, au moyen d'un dispositif d'identification (6), un composant (2) respectivement tenu à disposition pour le raccordement dans l'installation de distribution (1) est identifié, **en ce que**, au moyen d'un dispositif de détermination de point de raccordement (19), au moins un point de raccordement théorique (7), auquel le composant (2) identifié est à raccorder, est déterminé en fonction du composant (2) identifié par le dispositif d'identification (6), et **en ce que**, au moyen d'un dispositif de surveillance (18), le point de raccordement réel auquel le composant (2) a réellement été raccordé, est surveillé et en cas de différence entre le point de raccordement réel détecté et le point de raccordement théorique (7), un message d'erreur est émis.

2. Procédé selon la revendication précédente, dans lequel, au moyen d'un système de réalité augmentée (ARS), une image de l'installation de distribution (1) provenant d'une caméra (10) orientée vers l'installation de distribution (1) est affichée sur un écran (4) sous la forme d'une image en direct ou d'une image enregistrée et le point de raccordement (7) respectivement déterminé par le dispositif de détermination (19) pour le composant (2) tenu à disposition, et auquel le composant (2) identifié est à raccorder, est inséré sur l'écran (4) dans l'image affichée.

3. Procédé selon la revendication précédente, dans lequel une position de montage théorique et/ou une position théorique du composant (2) identifié dans l'installation de distribution est également insérée sur l'écran (4) dans l'image affichée par le système de réalité augmentée (ARS).

4. Procédé selon l'une des deux revendications précédentes, dans lequel l'image de l'installation de distribution (1) affichée sur l'écran est adaptée en continu ou périodiquement à l'état réel du montage de l'installation de distribution, de plus en plus de composants (2) et leurs liaisons entre eux étant affichés dans l'image de l'installation de distribution (1) au fur et à mesure que le montage progresse, l'adaptation de l'image affichée étant de préférence commandée en fonction des composants identifiés par le dispositif d'identification (6) et/ou en fonction des processus de raccordement surveillés par le dispositif de surveillance (18).

5. Procédé selon l'une des revendications précédentes, dans lequel l'au moins un point de raccordement théorique (7) à déterminer pour un composant (2) identifié et sa position théorique dans l'installation de distribution (1) sont prélevés par le dispositif de détermination (19) dans un système de CAO électrique et/ou dans un ensemble de données de CAO, qui reproduit l'installation de distribution (1) et/ou son schéma de connexions.

6. Procédé selon l'une des revendications précédentes, dans lequel le composant (2) respectivement tenu à disposition pour le raccordement
- est identifié par le dispositif d'identification (6) à l'aide d'un marquage (8) appliqué sur le composant (2), en particulier sous la forme d'un code-barres ou d'un code de caractères, et/ou
- est identifié par le dispositif d'identification (6) à l'aide de données d'image, qui sont également utilisées pour la génération de l'image de l'installation de distribution (1) sur l'écran (4), au moyen d'un dispositif d'évaluation d'image (9), et en particulier identifié à l'aide d'une couleur du composant (2) et/ou d'un diamètre du composant (2) et/ou d'une dimension d'au moins un axe d'extension principal et/ou d'une cote géométrique du composant (2).

7. Procédé selon la revendication 2 ou l'une des revendications se référant à celle-ci, dans lequel l'image de l'installation de distribution est affichée sur un visiocasque (11) à porter par l'ouvrier, et est enregistrée par une caméra (10) prévue sur le visiocasque (11).

8. Procédé selon l'une des revendications précédentes, dans lequel au moins une image de l'installation de distribution (1) mise à disposition pendant et/ou après une étape de montage est évaluée par le dispositif de surveillance (18) au moyen d'un dispositif d'évaluation d'image (9), un composant (2) identifié par le dispositif d'évaluation d'image (9) étant comparé en ce qui concerne sa position réelle et/ou son orientation réelle et/ou son câblage réel, acquis à partir de l'image, avec une position théorique et/ou une orientation théorique et/ou un câblage théorique, mis à disposition par le dispositif de détermination de raccordement (19) pour le composant (2) identifié, un message d'erreur étant émis en cas de différence lors de ladite comparaison théorie/réalité.

9. Procédé selon la revendication précédente, dans lequel au moins une des étapes de surveillance suivantes est exécutée par le dispositif de surveillance (18) :
- surveillance, lors de l'application d'un embout, si un câble possède la bonne section et/ou a été dénudé sur la bonne longueur et/ou si un embout a été serti correctement ;
- surveillance de l'utilisation d'un outil prédéfini ;
- surveillance de la pose d'un câble dans une couleur prédéfinie et/ou avec une section prédéfinie ;
- surveillance de la fixation d'extrémités de conducteur de la manière prédéfinie ;
- surveillance d'insertions incorrectes ;
- surveillance du montage d'un composant (2) sur un emplacement prédéfini de l'installation de distribution (1).

10. Procédé selon l'une des revendications précédentes, dans lequel une armoire de distribution est montée en guise d'installation de distribution (1), dans laquelle sont montés différents composants (2) électroniques et électroniques de puissance tels que des convertisseurs de fréquence, des condensateurs et des modules de capteurs d'une part et différents câbles avec différents diamètres de câble d'autre part.

11. Dispositif de montage auxiliaire pour faciliter et contrôler le montage correct d'installations de distribution électriques (1), qui sont constituées progressivement d'une pluralité de composants (2) différents dans un ordre non préalablement défini, comprenant un dispositif d'identification (6) destiné à l'identification d'un composant (2) respectivement tenu à disposition pour le raccordement dans une installation de distribution (1), un dispositif de détermination de point de raccordement (19) destiné à la détermination d'au moins un point de raccordement théorique (7), auquel le composant (2) identifié doit être raccordé, en fonction d'un signal du dispositif d'identification (6), et un dispositif de surveillance (18) destiné à la surveillance du point de raccordement réel, auquel le composant (2) a réellement été raccordé, et à la mise à disposition d'un message d'erreur en cas de différence entre le point de raccordement réel détecté et le point de raccordement théorique (7).

12. Dispositif de montage auxiliaire selon la revendication précédente, comprenant un système de réalité augmentée (ARS) doté d'un écran (4) destiné à l'affichage d'une image de l'installation de distribution (1) et un dispositif d'insertion destiné à l'insertion de l'au moins un point de raccordement (7) du composant (2) identifié dans l'image de l'installation de distribution (1) affichée sur l'écran (4), une caméra (10) orientée vers l'installation de distribution (1) à monter étant prévue pour mettre à disposition l'image à afficher sur l'écran (4) sous la forme d'une image en direct et/ou d'une image enregistrée.

13. Dispositif de montage auxiliaire selon l'une des deux revendications précédentes, dans lequel l'écran (4) et/ou la caméra (10) sont intégrés dans un visiocasque (11) à porter par l'ouvrier.

14. Dispositif de montage auxiliaire selon l'une des revendications précédentes, dans lequel le système de réalité augmentée (ARS) comporte une interface de données de CAO et peut être raccordé à un système de CAO électrique, dans lequel l'installation de distribution (1) et/ou son schéma de connexions peuvent être générés et/ou enregistrés.

15. Dispositif de montage auxiliaire selon l'une des revendications précédentes, dans lequel le dispositif d'identification (6) comporte un lecteur de code (12) destiné à la lecture d'un marquage (8) appliqué sur le composant (2) à monter, en particulier un lecteur de code-barres, et/ou comporte un dispositif d'évaluation d'image (9) destiné à l'évaluation des données d'image affichées sur l'écran (4) et l'identification d'un composant (2) à partir de ces données d'image.

16. Dispositif de montage auxiliaire selon l'une des revendications précédentes, dans lequel le dispositif de surveillance (18) comporte un dispositif d'évaluation d'image (9) destiné à l'évaluation d'au moins une image enregistrée pendant et/ou après une étape de montage et un dispositif de comparaison destiné à la comparaison d'informations acquises par l'évaluation d'image concernant une position réelle et/ou une orientation réelle et/ou un câblage réel d'un composant (2) identifié avec une position théorique et/ou une orientation théorique et/ou un câblage théorique, un avertisseur d'erreur étant prévu pour insérer un message d'erreur dans l'image représentée sur l'écran (4) en fonction d'un signal du dispositif de comparaison.
